# EUROPEAN PATENT SPECIFICATION

(11) **EP 1 660 790 B1**
(45) Date of publication and mention of the grant of the patent: **14.02.2007**
(21) Application number: 04768124.2
(22) Date of filing: 19.08.2004
(51) Int. Cl.: F16H 61/28

(54) **GEAR SELECTOR MECHANISMS**
GANGSCHALTMECHANISMUS
MECANISMES DE CHANGEMENT DE VITESSES

(30) Priority: 21.08.2003 GB 0319705
(43) Date of publication of application: 31.05.2006
(73) Proprietor: RICARDO UK LIMITED, Shoreham-by-Sea, West Sussex BN43 5FG (GB)
(72) Inventor: BURK, John Puis, Leamington Spa, Warwickshire CV13 1UD (GB); MEPHAM, Shaun, Ewan, Banbury, Oxfordshire OX16 3Q1 (GB); BARNES, Robert John, Rawnsley, Cannock, Staffordshire WS12 5FB (GB)
(74) Representative: Chettle, Adrian John
(86) International application number: PCT/GB2004/003565
(87) International publication number: WO 2005/019703

(56) References cited:
- WO-A-01/23786
- DE-A- 19 509 477
- GB-A- 1 399 370
- US-A1- 2003 121 343

## Description

The present invention relates to gear selector mechanisms and is concerned with such mechanisms for use with so-called twin clutch gearboxes. Such gearboxes effectively have two torque paths in parallel, the outputs of which are connected to the output shaft of the gearbox and the inputs of which are connected to the input shaft of the gearbox via a respective clutch. Only one clutch is engaged at any one time which means that torque is transmitted through one or other of the torque paths. The selection of gears in such gearboxes is effected mechanically and not manually and whilst the gearbox is operating in one gear ratio using one of the torque paths, the next gear ratio is preferably engaged in the other inoperative torque path. When it is desired to change gear, the currently operative clutch is disengaged and the other clutch is engaged and torque is then transmitted through the other torque path.

Twin clutch gearboxes are known and one example of such a gearbox is disclosed in US 6460425. In general, such gearboxes include two parallel pairs of coaxial shafts, each shaft in each pair of shafts carrying two or more gearwheels in mesh with a respective gearwheel carried by a shaft in the other pair of shafts. At least some of the gearwheels are selectively lockable to the shaft by which they are carried, so that they rotate with it, and unlockable, so that they are free to rotate with respect to it. The selective locking of these gearwheels is effected by respective dog clutches and situated between each adjacent pair of selectively lockable gearwheels on a shaft is a clutch sleeve which is selectively movable between a first position, in which one of the gearwheels is locked to the shaft, a second position, in which the other gearwheel is locked to the shaft, and a central or neutral position in which neither gearwheel is locked to the shaft. Each clutch sleeve is moved by a respective gear fork and the gear forks are carried by respective rails. The gear selector for such a gearbox will typically include four such rails, though the number may be greater or smaller than this, depending on the number of gear ratios which the gearbox is able to provide.

WO 01/23786 discloses a mechanical gear selector mechanism for a gearbox of single clutch type, that is to say with only a single torque path. The gearbox has four gear selector rails side by side, each of which has a recess in its upper surface which may be engaged by a selector finger extending laterally from a shaft. The shaft is connected to two actuators, one of which is arranged to move the shaft in the direction of its length, so as to move the selector finger transverse to the length of the gear changing rails, and the other of which is arranged to rotate the shaft through a relatively small angle in both directions so as to move the free end of the selector finger laterally, that is to say transversely of the shaft on which the selector finger is carried. In use, all the selector rails, which are situated side-by-side, are initially positioned such that the recesses formed in them are aligned. The first actuator is actuated to move the selector finger through the aligned recesses until it is within the recess of the selected selector rail, that is to say the recess of the selector rail which is to be moved. The other actuator is then actuated to move the free end of the selector finger transversely in one direction or the other to engage one of the two gear ratios associated with that selector rail. Whilst that gear ratio is in use, the gear selector finger remains in engagement with the selector rail in question. When it is desired to change gear, the second actuator is actuated to return the selector rail to the neutral position and the first actuator is then actuated to move the selector finger into the recess of the selector rail associated with the next gear which is to be used and the procedure is then repeated.

Accordingly, it is a relatively time-consuming procedure to change gears using the selector mechanism disclosed in the prior specification referred to above. Such a delay is unacceptable with twin clutch gearboxes in which it is desired to pre-engage the next gear ratio which is to be used in the torque path which is not currently in use. Such pre-engagement of gear ratios is not possible with a selector mechanism of the type disclosed in the prior document.

It is therefore currently necessary with twin clutch gearboxes to provide a separate actuator for each selector rail capable of moving it between its three positions. This is extremely bulky and expensive.

It is, therefore, the object of the invention to provide a mechanical gear selector mechanism for use with a twin clutch gearbox which includes the minimum number of actuators but which is capable of changing gears with little or no delay.

According to the present invention a gear selector mechanism for a twin clutch gearbox includes a shaft and a first actuator arranged to move the shaft linearly parallel to its length, the shaft carrying a pivotable lever carrying a selector finger adapted to engage in a recess in a selected gear selector rail, a second actuator and return means cooperating with the pivotal lever, the second actuator being arranged to pivot the lever from a first position, in which the selector finger does not engage in a recess in a gear selector rail, to an operative position, in which the selector finger does engage in a recess in a gear selector rail, and the return means being arranged to move the lever from the operative position to the inoperative position, the second actuator being carried by a carrier which is connected to a third actuator arranged to move the carrier linearly in a direction transverse to the length of the shaft, the shaft or its connection to the pivotable lever being constructed to permit relative movement of the pivotable lever and the first actuator in the direction of movement of the third actuator.

Thus the gear selector mechanism in accordance with the present invention is generally similar to that disclosed in WO 01/23786 but has the major distinction that the selector finger may be disengaged from the recess in a gear selector rail in any position of the gear selector rail and not only when the gear selector rail is in the position in which its recess is aligned with the recesses in the other rails. This means that once the selector finger has moved a gear selector rail to the desired position it may immediately be removed and then engaged with a further gear selector rail, which may then be moved to a desired position, that is to say into the position in which the next gear ratio in which the twin clutch gearbox is to operate is engaged. This next gear ratio is, however, in the torque path of the twin clutch gearbox which is not currently in use. This is in contrast to the selector mechanism described in the prior publication referred to above in which, if it were used in connection with a twin clutch gearbox, it would be necessary to leave the gear selector finger in engagement with the gear selector rail associated with the gear ratio currently in use until it were desired to change gear. At that time, the gear selector rail would be moved back to the neutral position, in which its recess is in line with the recesses in the other selector rails and the gear selector finger would then be moved into engagement with the recess in the next selected selector rail and that rail then moved into the desired position. This would result in a very substantial delay in gear changes which is eliminated with the gear selector mechanism in accordance with the present invention. This is achieved with relatively little complexity of the necessary actuating valves in that a total of only three valves is needed, one of which is of particularly simple type in that it is required only to move the pivotable lever from the inoperative position to the operative position.

The pivotable lever is carried by the shaft and thus moves with it in the direction of the length of the shaft. The second actuator is, however, connected to be moved by the third actuator and it is therefore necessary that either the shaft or its connection to the pivotable lever is constructed to permit relative movement of the pivotable lever and the first actuator in the direction of movement of the third actuator. This may be achieved in a number of ways and in one embodiment the shaft comprises two portions connected end to end by a connection which permits relative movement of the two portions in the direction of movement of the third actuator, and the pivotable lever is carried by the portion of the shaft remote from the first actuator. In an alternative embodiment, the shaft is of one-piece construction and is connected to the pivotable lever by a connection which permits relative movement in the direction of movement of the third actuator. The connection may take a number of different forms but in one embodiment it comprises a peg or projection carried by one of the members which is connected and is movably received in a recess or slot formed in the other of the members to be connected which is elongate in the direction of movement of the third actuator.

In the preferred embodiment, the first actuator is a hydraulic actuator of the type which includes a cylinder containing a piston arranged to adopt only one of a number of discrete positions. The number of discrete positions will of course depend on the number of gear selector rails in the gearbox with which the selector mechanism is used but typically there are four such rails. It is preferred that the first actuator is constructed to adopt one of four positions and within the cylinder are two longitudinal sleeves, each of which can adapt two longitudinal positions with respect to the cylinder, the piston being mounted within the sleeves and being able to adopt two positions with respect to them, the cylinder having four hydraulic ports. It will be appreciated that this is particularly simple because no position sensor or feedback control is required in connection with the actuator.

Similarly, it is preferred that the third actuator is a hydraulic actuator of the type which includes a cylinder containing a piston arranged to adopt only one of a number of discrete positions. This actuator will move a gear selector rail between a first engaged position, in which the gear selector fork connected to the selector rail will move the associated clutch sleeve so that one gear wheel of an adjacent pair of gearwheels on a shaft is locked to the shaft, a second engaged position in which the other gearwheel of the pair is locked to the shaft and a neutral position. It is therefore preferred that the third actuator is constructed to adopt one of three positions, the internal surface of the cylinder affording two fixed stop surfaces and the piston affording two movable stop surfaces which cooperate with respective fixed stop surfaces, the cylinder having two hydraulic ports communicating with respective pressure spaces within the cylinder.

It is also preferred that the second actuator is a hydraulic actuator which includes a cylinder containing a piston, the piston and cylinder defining a single pressure space.

In the preferred embodiment, the single pressure space in the second actuator communicates with the two pressure spaces in the third actuator via a pressure passage extending partially within the piston of the third actuator, the pressure passage including a valve which is constructed to permit the transfer of pressure from each pressure space in the third actuator to the pressure passage but to prevent communication between the two pressure spaces in the third actuator. In practice, the second actuator will be smaller and lighter than the third actuator and will thus react more rapidly to changes in the actuating pressure applied to it. This means that when pressure is applied to one or other side of the third actuator, this pressure is immediately applied to the second actuator which promptly moves to shift the pivotable lever from the inoperative position to the operative position before the third actuator has started to move.

The pivotable lever is connected to the shaft to be moved by the first actuator but the second actuator, which acts on the pivotable shaft is not moved by the first actuator, though it is moved transversely by the third actuator. In order to ensure that the second actuator can always engage the pivotable lever, it is preferred that the pivotable lever carries a laterally broadened portion against which the second actuators acts, the broadened portion being aligned with the second actuator over the entire range of movement of the first actuator.

The return means acting on the pivotable lever may take various forms but for reasons of economy and simplicity it is preferred that it constitutes a spring, such as a torsion spring.

Further features and details of the invention will be apparent from the following description of two specific embodiments, which are given by way of example only with reference to the accompanying drawings, in which:
Figure 1 is a scrap sectional view through part of a twin clutch gearbox showing a first embodiment of the selector mechanism in accordance with the present invention;
Figure 2 is a view in the direction of the arrow 2 in Figure 1;
Figure 3 is a sectional view on the line 3-3 in Figure 1;
Figure 4 is a perspective view of a second embodiment of the selector mechanism in accordance with the present invention; and
Figure 5 is a diagram showing the three hydraulic actuators and the associated hydraulic circuitry.

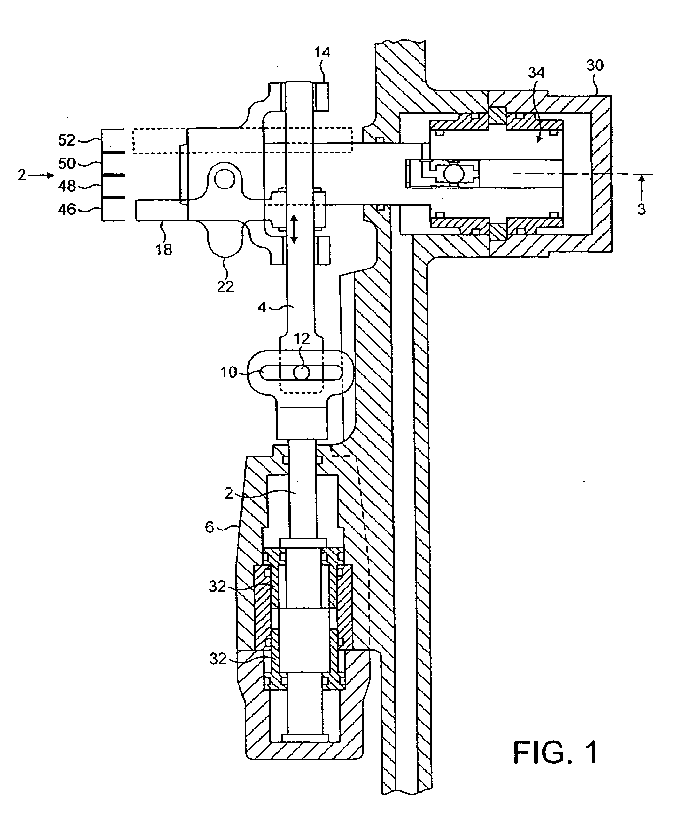

The selector mechanism shown in Figures 1 to 3 includes an elongate rod which is divided lengthwise into two portions 2, 4. The portion 2 is connected to the piston rod of a four position hydraulic actuator 6, which will be described below, and is connected to the portion 4 by a connection which permits no relative longitudinal movement but does permit relative movement in a single direction transverse to the length of the rod 2, 4. For this purpose, the portion 4 has a bifurcated end 8, in which holes are formed. The portion 2 has a flat end which is received within the bifurcation 8 and has a slot 10 formed in it. A retaining pin 12 passes through the holes in the bifurcation 8 and through the slot 10. Relative transverse movement of the portions 2, 4 is permitted by movement of the peg 12 within the slot 10.

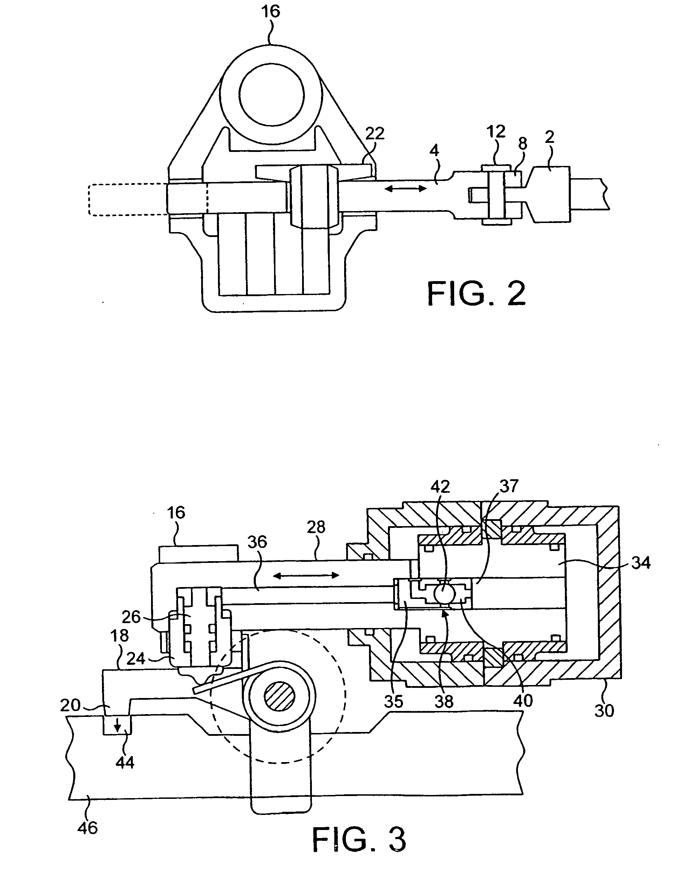

The portion 4 of the rod is longitudinally slidably received in mountings 14 connected to a carrier 16. The portion 4 also pivotally carries a pawl in the form of an elongate lever 18, at whose free end there is a depending projection or selector finger 20. Connected to the portion 4 and acting on the lever 18 is a spring 22 which acts on the lever in the clockwise direction, as seen in Figure 3. Integral with the upper portion of the lever 18 is a laterally broadened portion 23, the purpose of which will be described below. The carrier 30 carries a single acting hydraulic actuator 24, whose piston rod 26 is positioned above the region 23. When the actuator 24 is actuated, its piston rod 26 acts on the region 23 and causes the lever 18 to rotate in the anticlockwise direction, as seen in Figure 3. The carrier 16 is connected to the piston rod 28 of a three position hydraulic actuator 30, which will also be described below.

The four position hydraulic actuator 6 is of a type which is known per se and is disclosed in e.g. GB 1399370. Its piston rod is of varying cross-sectional area and affords a number of projecting stop surfaces. Slidably accommodated within the cylinder space of the actuator 6 are two sleeves 32, each of which also affords a lateral stop surface. The internal surface of the cylinder also affords a number of stop surfaces or shoulders. The two sleeves 32 may adopt two different longitudinal positions within the cylinder space, namely a first position, as shown in Figure 1, and a second position in which the uppermost sleeve seen in Figure 1 is in engagement with a shoulder formed on the interior of the hydraulic cylinder. The piston of the actuator may adopt two different positions with respect to the sleeves and the fact that the sleeves may themselves adopt two different positions means that the piston rod may be selectively controlled to adopt one of four different positions. The actuator 6 thus includes four oil admission ports which communicate respectively with the two chambers defined between the ends of the cylinder and the adjacent ends of the sleeves and two further chambers defined between the sleeves and the cylinder wall. The admission of pressurised oil selectively to these chambers will cause the piston rod to adopt one of its four positions and no position sensors or feedback control are required.

The actuator 30 operates on a similar principle and its construction is again shown in the prior patent referred to above. It has only two pressurised oil admission ports which communicate respectively with the two chambers defined between the piston 34 and the ends of the cylinder. If pressurised oil is admitted to, say, the left-hand chamber, the piston 34 will adopt a position to the right. If pressurised oil is admitted to the right-hand chamber, the piston will adopt a position to the left. If pressurised oil is admitted to both chambers, the piston will adopt a neutral or central position, as illustrated in Figure 1.

The single acting hydraulic actuator 24 has a single pressurised oil space which communicates with an oil passage 36 in the piston rod 28. This passage 36 communicates with both of the oil chambers in the actuator 30 by way of a shuttle valve 38. This shuttle valve 38 includes a cylindrical shuttle member 35 which is received in a cylindrical bore 37 in the actuator piston 39 and affords a central cavity 40 which communicates with both of the oil chambers of the valve 30. The oil passage 36 communicates with the oil cavity 40 via one or more radially directed passages. The oil cavity 40 contains a movable valve member 42 which forms a seal with the edges of the space 40 and thus prevents direct communication between the two oil chambers of the actuator 30. If pressurised oil is applied to both of the oil chambers of the actuator 30, this pressure acts on both sides of the valve member 42 which therefore adopts the central position shown in Figure 3. If, however, pressurised oil is applied only to the right-hand oil chamber of the actuator 30, the valve member 42 moves to the left, thereby uncovering the oil ports communicating with the chamber 40 and this oil pressure is then communicated to the actuator 24, the piston rod 26 of which is then extended to depress the lever 18. Similarly, if pressurised oil is applied to the left-hand oil chamber of the actuator 30, the valve member 42 moves to the right thereby connecting the left-hand oil chamber to the actuator 24, the piston rod of which is again extended.

In use, the gear selector finger 20 is positioned above the recesses 44 in a number of adjacent gear selector rails of a twin clutch gearbox. In the present case, the gearbox includes four selector rails designated 46, 48, 50 and 52, respectively. When it is desired to select a predetermined gear ratio, the four position hydraulic actuator 6 is actuated appropriately to move the elongate rod 2, 4 in the direction of its length. The rod slides in the mountings 14 connected to the carrier 16 and the lever 18 and the spring 22 move with it but the actuator 24 does not. The rod 2, 4 is moved to the position in which the selector finger 20 is in line with whichever gear selector rail it is desired to move. The three position hydraulic actuator is then moved from the neutral position shown in Figure 1, in which pressure is applied to both hydraulic chambers by removing the pressure supply from one of the chambers. If the pressure supply is maintained to the right-hand chamber, as seen in Figure 1, the shuttle member 42 is moved to the left under the action of this pressure whilst if it is the pressure in the left-hand chamber which is maintained, the shuttle member 42 moves to the right. In either case, the ports communicating with the passage 36 are uncovered and the high pressure is communicated to the passage 36 and thus to the actuator 24. Accordingly, as soon as the three position actuator 30 is actuated, the actuator 24 is actuated and depresses the lever 18 so that the gear selector finger 20 is moved from the raised position shown in Figure 3 to a depressed position in which it is engaged in with the recesses or slots 44 in the gear selector rails. The carrier 16 is then moved to the left or the right as seen in Figures 1 and 3 so as to move the gear selector fork carried by the gear selector rail in the desired direction to move the clutch sleeve associated with it in the desired direction to engage the selected gear ratio. The gear ratio which is selected will be in the torque path of a twin clutch gearbox which is not currently in use. On the next occasion that it is desired to change the gear ratio of the gearbox, the clutch associated with the torque path which is in use is disengaged and the clutch associated with the torque path in which the next gear ratio has just been engaged, as described above, is then engaged. However, as soon as a gear ratio has been engaged, as described above, the three position actuator 30 is immediately actuated so as to move it back into the neutral position. This involves the application of hydraulic pressure to that chamber which was previously unpressurised. As soon as this occurs, the shuttle member 42 moves back into the position shown in Figure 3 in which pressure is no longer applied to the oil passage 36. The actuator 24 is therefore no longer pressurised and the return spring 22 then acts on the lever 18 to return it to the raised position shown in Figure 3. This moves the gear selector finger out of engagement with the recess 44 in the gear selector rail which was just moved and by appropriate actuation of the actuators 6 and 30, the gear selector finger can then be used to move one of the other gear selector rails to pre-engage the next gear ratio that will be required in the gearbox, that is to say the gear ratio that will be engaged on the next occasion that a gear change of the gearbox is effected. It will be appreciated that since the actuator 24 is very much smaller and lighter than the three position actuator 30, as soon as the actuator 30 is actuated by the application or removal of pressure from one of its chambers, it is the actuator 24 that reacts first to this change in conditions. This means that when the gear selector finger is to be moved out of engagement with the recess in the gear selector rail by the application of equal pressure to both chambers of the three-way actuator 30, the gear selector finger firstly moves upwardly out of engagement with the recess 44 in the gear selector rail and is then moved in the direction of the length of the gear selector rail in question, as the three-way actuator 30 returns to the neutral position, without moving the gear selector rail with it. It can then be moved by the four position actuator 6 until it is above the next gear selector rail that is to be moved and then moved into engagement with that rail by appropriate actuating of the actuator 30. The pivotable lever 18 is moved with the rod 2, 4 but the actuator 24 is not. However, the broadened portion 23 of the lever 18 is of sufficient width that the actuator 24 can always engage it and thus depress the lever 18, regardless of the position occupied by the actuator 6.

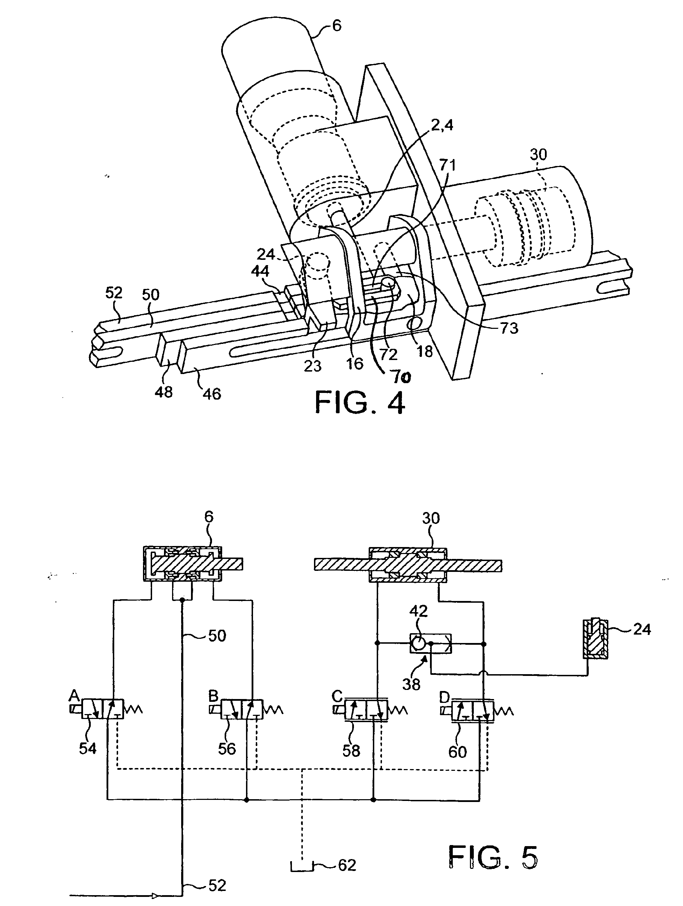

Figure 4 shows a second embodiment of the invention which is substantially the same as that illustrated in Figures 1 to 3 but differs from it in the positioning of the connection which permits relative lateral movement of the first actuator 6 and the pivotable lever 18. In this case, the shaft 2, 4 connected to the four position actuator 6 is of one-piece construction. At its free end it carries a generally rectangular member 70, in which an elongate slot 71 is formed. This slot extends perpendicular to the length of the shaft 2, 4 and parallel to the direction of movement of the actuator 30. Accommodated in this slot is a peg or projection 72 connected to the pivotable lever 18. The connection constituted by the engagement of the peg 72 in the slot prevents relative movement of the shaft 2, 4 and the pivotable lever 18 in the direction parallel to the length of the shaft but permits such movement in the direction perpendicular to the shaft. It will of course be appreciated that in this embodiment, and indeed in the previous embodiment, the length of the slot must be at least equal to the maximum displacement of the actuator 30. The pivotable lever 18 is not mounted on pivots on the shaft 2, 4, as in the previous embodiment, but is instead mounted to pivot about and slide along a shaft 73, which extends parallel to the shaft 2, 4 and is carried by the carrier 16. In other respects, the construction and operation are the same as those described above.

The construction of the three position and four position actuators described above enables the gear selector mechanism to be relatively simple because no position sensors or feedback controls are necessary with these actuators. The hydraulic valves used to operate these actuators may also be relatively simple and Figure F is a diagrammatic view of a preferred layout of the hydraulic circuitry. As may be seen, the four position actuator 6 has four oil admission ports, two of which act on the inner surfaces of respective sliding sleeves 32 and are connected by means of a line 50 to the high pressure supply line 52 at all times. The other two ports of this actuator are selectively connectable to the high pressure line 52 by means of respective control valves 54, 56. The two pressure chambers of the three position actuator 30 are selectively connectable to the high pressure supply by means of respective control valves 58, 60. The shuttle valve 38, which is connected to control the pressure supply to the actuator 24, is shown connected between the supply lines to the two pressure chambers of the actuator 30 at positions downstream of the control valves 58 and 60. When it is required to vent a pressure chamber of one or other actuator 6, 30, that chamber is connected by the associated control valve to a low pressure oil reservoir 62.

## Claims

1. A gear selector mechanism for a twin clutch gearbox including a shaft (2, 4) and a first actuator (6) arranged to move the shaft linearly parallel to its length, the shaft being connected to a pivotable lever (18) carrying a selector finger (20) adapted to engage in a recess (44) in a selected gear selector rail (46; 48; 50; 52), a second actuator (24) and return means (22) cooperating with the pivotal lever, the second actuator (24) being arranged to pivot the lever (18) from an inoperative position, in which the selector finger (20) does not engage in a recess (44) in a gear selector rail to an operative position, in which the selector finger (18) does engage in a recess (44) in a gear selector rail, and the return means (22) being arranged to move the lever (18) from the operative position to the inoperative position, the second actuator (24) being carried by a carrier (28) which is connected to a third actuator (30) arranged to move the carrier linearly in a direction transverse to the length of the shaft, the shaft or its connection to the pivotable lever being constructed to permit relative movement of the pivotable lever (18) and the first actuator (6) in the direction of movement of the third actuator (30).

2. A mechanism as claimed in Claim 1 in which the shaft comprises two portions (2, 4) connected end to end by a. connection which permits relative movement of the two portions in the direction of movement of the third actuator (30), and the pivotable lever (18) is carried by the portion of the shaft remote from the first actuator (6).

3. A mechanism as claimed in Claim 2 in which the pivotable lever (18) is mounted to pivot about the portion of the shaft remote from the first actuator (6).

4. A mechanism as claimed in Claim 1 in which the shaft (4) is connected to the pivotable lever (18) by a connection which permits relative movement in the direction of movement of the third actuator.

5. A mechanism as claimed in Claim 4 in which the pivotable lever (18) is mounted to pivot about a support shaft which is connected to the carrier.

6. A mechanism as claimed in any one of Claims 2 to 5 in which the connection comprises a peg or projection (12) movably received in a recess or slot (10) which is elongate in the direction of movement of the third actuator.

7. A mechanism as claimed in any one of Claims 1 to 6 in which the first actuator (6) is a hydraulic actuator of the type which includes a cylinder containing a piston arranged to adopt only one of a number of discrete positions.

8. A mechanism as claimed in Claim 7 in which the first actuator (6) is constructed to adopt one of four positions and within the cylinder are two longitudinal sleeves (32), each of which can adapt two longitudinal positions with respect to the cylinder, the piston being mounted within the sleeves and being able to adopt two positions with respect to them, the cylinder having four hydraulic ports.

9. A mechanism as claimed in any one of the preceding claims, in which the third actuator (30) is a hydraulic actuator of the type which includes a cylinder containing a piston arranged to adopt only one of a number of discrete positions.

10. A mechanism as claimed in Claim 9 in which the third actuator (30) is constructed to adopt one of three positions, the internal surface of the cylinder affording two fixed stop surfaces and the piston affording two movable stop surfaces which cooperate with respective fixed stop surfaces, the cylinder having two hydraulic ports communicating with respective pressure spaces within the cylinder.

11. A mechanism as claimed in Claim 9 or 10 in which the second actuator (24) is a hydraulic actuator which includes a cylinder containing a piston (26), the piston and cylinder defining a single pressure space.

12. A mechanism as claimed in Claims 10 and 11 in which the single pressure space m the second actuator (24) communicates with the two pressure spaces in the third actuator (30) via a pressure passage (36) extending partially within the piston of the third actuator, the pressure passage including a valve (38) which is constructed to permit the transfer of pressure from each pressure space in the third actuator to the pressure passage but to prevent communication between the two pressure spaces in the third actuator.

13. A mechanism as claimed in any one of the preceding claims in which the pivotable lever (18) carries a laterally broadened portion (22) against which the second actuators acts, the broadened portion being aligned with the second actuator over the entire range of movement of the first actuator.

14. A mechanism as claimed in any one of the preceding claims in which the return means acting on the pivotable lever (18) is a spring.

## Patentansprüche

1. Gangschaltmechanismus für ein Doppelkupplungsgetriebe mit einer Welle (2, 4) und einem ersten Stellglied (6) so ausgebildet, dass es die Welle linear parallel zu ihrer Längenausdehnung bewegt, wobei die Welle mit einem schwenkbaren Hebel (18) verbunden ist, der einen Selektorfinger (20) trägt, der geeignet ist, in eine Ausnehmung (44) in einer ausgewählten Gangwahlschiene (46; 48; 50; 52) einzugreifen, einem zweiten Stellglied (24) und Rückführmitteln (22), die mit dem Schwenkhebel kooperieren, wobei das zweite Stellglied (24) so ausgebildet ist, dass es den Hebel (18) von einer funktionslosen Position, in der der Selektorfinger (20) nicht in einer Ausnehmung (44) in einer Gangauswahlschiene in Eingriff ist, zu einer Funktionsposition schwenkt, in der der Selektorfinger (18) in einer Ausnehmung (44) in einer Gangauswahlschiene in Eingriff ist, und die Rückführmittel (22) so ausgebildet sind, dass sie den Hebel (18) von der Funktionsposition zur funktionslosen Position bewegen, wobei das zweite Stellglied (24) von einem Träger (28) getragen ist, der mit einem dritten Stellglied (30) verbunden ist, so dass der Träger linear in einer Richtung quer zur Längenausdehnung der Welle bewegt wird, wobei die Welle oder ihre Verbindung zum schwenkbaren Hebel so konstruiert ist, dass sie Relativbewegung des schwenkbaren Hebels (18) und des ersten Stellglieds (6) in die Bewegungsrichtung des dritten Stellglieds (30) ermöglichen.

2. Mechanismus nach Anspruch 1, bei dem die Welle zwei Teile (2, 4) umfasst, die zwischen ihren beiden Enden mittels einer Verbindung verbunden sind, die Relativbewegung der beiden Teile in die Bewegungsrichtung des dritten Stellglieds (30) ermöglicht, und der schwenkbare Hebel (18) ist durch den Teil der Welle entfernt vom ersten Stellglied (6) getragen.

3. Mechanismus nach Anspruch 2, bei dem der schwenkbare Hebel (18) so angebracht ist, dass er um den Teil der Welle entfernt vom ersten Stellglied (6) schwenkt.

4. Mechanismus nach Anspruch 1, bei dem die Welle (4) mit dem schwenkbaren Hebel (18) durch eine Verbindung verbunden ist, die Relativbewegung in der Bewegungsrichtung des dritten Stellglieds ermöglicht.

5. Mechanismus nach Anspruch 4, bei dem der schwenkbare Hebel (18) so angebracht ist, dass er um eine Stützlagerwelle schwenkt, die mit dem Träger verbunden ist.

6. Mechanismus nach einem der Ansprüche 2 bis 5, bei dem die Verbindung einen Zapfen oder Vorsprung (12) umfasst, der verschiebbar in einer Ausnehmung oder einem Schlitz (10) aufgenommen ist, der in Bewegungsrichtung des dritten Stellglieds länglich ist.

7. Mechanismus nach einem der Ansprüche 1 bis 6, bei dem das erste Stellglied (6) ein hydraulisches Stellglied des Typs ist, der einen Zylinder aufweist, der einen Kolben enthält, der so ausgebildet ist, dass er nur eine einer Anzahl von diskreten Positionen einnimmt.

8. Mechanismus nach Anspruch 7, bei dem das erste Stellglied (6) so konstruiert ist, dass es eine von vier Positionen einnimmt und im Zylinder zwei längsgerichtete Buchsen (32) vorhanden sind, deren jede zwei Längspositionen in Bezug auf den Zylinder einnehmen kann, wobei der Kolben in den Buchsen angebracht ist und in der Lage ist, zwei Positionen in Bezug dazu einzunehmen, wobei der Zylinder vier Hydraulikanschlüsse aufweist.

9. Mechanismus nach einem der vorhergehenden Ansprüche, bei dem das dritte Stellglied (30) ein Hydraulikstellglied des Typs ist, der einen Zylinder aufweist, der einen Kolben enthält, der so ausgebildet ist, dass er nur eine einer Anzahl von diskreten Positionen einnimmt.

10. Mechanismus nach Anspruch 9, bei dem das dritte Stellglied (30) so konstruiert ist, dass es eine von drei Positionen einnimmt, wobei die Innenfläche des Zylinders zwei feste Stopflächen bietet und der Kolben zwei bewegliche Stopflächen bietet, die mit entsprechenden festen Stopflächen kooperieren, wobei der Zylinder zwei Hydraulikanschlüsse aufweist, die mit entsprechenden Druckräumen im Zylinder kommunizieren.

11. Mechanismus nach Anspruch 9 oder 10, bei dem das zweite Stellglied (24) ein Hydraulikstellglied ist, das einen Zylinder aufweist, der einen Kolben (26) enthält, wobei der Kolben und der Zylinder einen einzigen Druckraum definieren.

12. Mechanismus nach Anspruch 10 und 11, bei dem der einzige Druckraum im zweiten Stellglied (24) mit den beiden Druckräumen im dritten Stellglied (30) über eine Druckverbindung (36) kommuniziert, die sich teilweise im Kolben des dritten Stellglieds erstreckt, wobei die Druckverbindung ein Ventil (38) aufweist, das so konstruiert ist, dass es die Druckübertragung von jedem Druckraum im dritten Stellglied zur Druckverbindung ermöglicht, aber Kommunikation zwischen den beiden Druckräumen im dritten Stellglied verhindert.

13. Mechanismus nach einem der vorhergehenden Ansprüche, bei dem der schwenkbare Hebel (18) einen seitlich verbreiterten Teil (22) trägt, gegen den das zweite Stellglied wirkt, wobei der verbreiterte Teil mit dem zweiten Stellglied über den gesamten Bewegungsbereich des ersten Stellglieds fluchtet.

14. Mechanismus nach einem der vorhergehenden Ansprüche, bei dem das auf den schwenkbaren Hebel (18) wirkende Rückführmittel eine Feder ist.

## Revendications

1. Mécanisme sélecteur de vitesse destiné à une boîte de vitesses à deux embrayages, comprenant un arbre (2, 4) et un premier organe de manoeuvre (6) destiné à déplacer l'arbre linéairement parallèlement à sa longueur, l'arbre étant raccordé à un levier pivotant (18) portant un doigt sélecteur (20) destiné à coopérer avec une cavité (44) d'un rail (46 ; 48 ; 50 ; 52) sélecteur de vitesse choisie, un second organe de manoeuvre (24) et un dispositif de retour (22) coopérant avec le levier pivotant, le second organe de manoeuvre (24) étant destiné à faire pivoter le levier (18) d'une position de repos, dans laquelle le doigt sélecteur (20) n'est pas en coopération avec une cavité (44) d'un rail sélecteur de vitesse, à une position de fonctionnement, dans laquelle le doigt sélecteur (18) coopère effectivement avec une cavité (44) d'un rail sélecteur de vitesse, et le dispositif de retour (22) étant disposé afin qu'il déplace le levier (18) de la position de repos à la position de travail, le second organe de manoeuvre (24) étant supporté par un chariot (28) qui est raccordé à un troisième organe de manoeuvre (30) destiné à déplacer le chariot linéairement en direction transversale à la longueur de l'arbre, l'arbre ou son raccord au levier pivotant ayant une construction destinée à permettre un déplacement relatif du levier pivotant (18) et du premier organe de manoeuvre (6) dans la direction de déplacement du troisième organe de manoeuvre (30).

2. Mécanisme selon la revendication 1, dans lequel l'arbre comprend deux parties (2, 4) raccordées bout à bout par un raccord qui permet un déplacement relatif des deux parties dans la direction de déplacement du troisième organe de manoeuvre (30), et le levier pivotant (18) est porté par la partie d'arbre distante du premier organe de manoeuvre (6).

3. Mécanisme selon la revendication 2, dans lequel le levier pivotant (18) est monté afin qu'il pivote autour de la partie d'arbre distante du premier organe de manoeuvre (6).

4. Mécanisme selon la revendication 1, dans lequel l'arbre (4) est raccordé au levier pivotant (18) par un raccord qui permet un déplacement relatif dans la direction de déplacement du troisième organe de manoeuvre.

5. Mécanisme selon la revendication 4, dans lequel le levier pivotant (18) est monté afin qu'il pivote autour d'un arbre de support qui est raccordé au chariot.

6. Mécanisme selon l'une quelconque des revendications 2 à 5, dans lequel le raccord comprend une saillie ou un picot (12) logé de façon mobile dans une fente ou cavité (10) qui est allongée dans la direction de déplacement du troisième organe de manoeuvre.

7. Mécanisme selon l'une quelconque des revendications 1 à 6, dans lequel le premier organe de manoeuvre (6) est un organe hydraulique de manoeuvre du type qui comprend un cylindre contenant un piston destiné à ne prendre qu'une position parmi un certain nombre de positions séparées.

8. Mécanisme selon la revendication 7, dans lequel le premier organe de manoeuvre (6) a une construction lui permettant d'adopter l'une de quatre positions et, dans le cylindre, sont disposés deux manchons longitudinaux (32) qui peuvent s'adapter chacun à deux positions longitudinales par rapport au cylindre, le piston étant monté dans les manchons et étant destiné à adopter deux positions par rapport à eux, le cylindre ayant quatre orifices hydrauliques.

9. Mécanisme selon l'une quelconque des revendications précédentes, dans lequel le troisième organe de manoeuvre (30) est un organe hydraulique de manoeuvre du type qui comprend un cylindre contenant un piston destiné à adopter uniquement une position parmi un certain nombre de positions séparées.

10. Mécanisme selon la revendication 9, dans lequel le troisième organe de manoeuvre (30) a une construction telle qu'il adopte l'une de trois positions, la surface interne du cylindre donnant deux surfaces fixes d'arrêt et le piston formant deux surfaces mobiles d'arrêt qui coopèrent avec les surfaces fixes respectives d'arrêt, le cylindre ayant deux orifices hydrauliques communiquant avec des espaces respectifs de pression à l'intérieur du cylindre.

11. Mécanisme selon la revendication 9 ou 10, dans lequel le second organe de manoeuvre (24) est un organe hydraulique de manoeuvre qui comprend un cylindre contenant un piston (26), le piston et le cylindre délimitant un seul espace de pression.

12. Mécanisme selon les revendications 10 et 11, dans lequel l'espace unique de pression formé dans le second organe de manoeuvre (24) communique avec les deux espaces de pression formés dans le troisième organe de manoeuvre (30) par l'intermédiaire d'un passage de pression (36) qui s'étend partiellement dans le piston du troisième organe de manoeuvre, le passage de pression comprenant une soupape (48) qui a une construction permettant le transfert de la pression de chaque espace de pression du troisième organe de manoeuvre au passage de pression mais qui empêche la communication entre les deux espaces de pression formés dans le troisième organe de manoeuvre.

13. Mécanisme selon l'une quelconque des revendications précédentes, dans lequel le levier pivotant (18) porte une partie latéralement élargie (22) contre laquelle agit le second organe de manoeuvre, la partie élargie étant alignée sur le second organe de manoeuvre sur toute la plage de déplacement du premier organe de manoeuvre.

14. Mécanisme selon l'une quelconque des revendications précédentes, dans lequel le dispositif de retour agissant sur le levier pivotant (18) est un ressort.
